# FASCICULE DE BREVET EUROPEEN

(11) **EP 3 377 397 B1**
(45) Date de publication et mention de la délivrance du brevet: **18.09.2024**
(21) Numéro de dépôt: 16797913.7
(22) Date de dépôt: 17.11.2016
(51) Int. Cl.: B62K 13/04, B62K 27/00, B60D 1/00

(54) **VÉHICULE DE TRANSPORT D'UNE CHARGE**
FAHRZEUG ZUM TRANSPORTIEREN EINER LAST
VEHICLE FOR TRANSPORTING A LOAD

(30) Priorité: 18.11.2015 FR 1561087
(43) Date de publication de la demande: 26.09.2018
(73) Titulaire: Fleximodal, 35510 Cesson-Sevigne (FR)
(72) Inventeur: LEVILLAIN, Charles, 35000 Rennes (FR)
(74) Mandataire: Vidon Brevets & Stratégie
(86) Numéro de dépôt international: PCT/EP2016/078009
(87) Numéro de publication internationale: WO 2017/085188

(56) Documents cités:
- EP-A1- 1 352 815
- CH-A2- 708 860
- CN-A- 104 512 312
- DE-A1- 102011 017 346
- DE-A1- 3 214 448
- DE-C- 617 694
- FR-A- 1 324 030
- FR-A1- 3 019 795
- GB-A- 2 291 638
- US-A- 2 576 048
- US-A- 2 603 501
- US-A- 2 638 236
- US-A- 2 870 928
- US-A- 3 945 661
- US-A- 375 911
- US-A- 4 725 067
- US-A1- 2002 096 857

## Description

La présente invention concerne un véhicule de transport de marchandises et une charge pour un tel véhicule de transport.

Le transport de marchandises s'effectue à l'aide de véhicules de transport. En particulier, il se développe actuellement des petits véhicules, par exemple du type triporteur ou vélo à remorque qui permettent de livrer des marchandises dans les villes. De tels véhicules de transport consistent généralement en un châssis monté sur des roues et présentant un coffre fixé sur le châssis et dans lequel des marchandises sont déposées. De tels véhicules nécessitent donc de charger les marchandises les unes après les autres dans le coffre depuis un lieu de stockage, ce qui entraîne un travail relativement long et peu ergonomique pour le personnel. La manipulation inverse s'effectue alors sur le lieu de livraison.

Un objet de la présente invention est de proposer un véhicule de transport de marchandises qui ne présente pas les inconvénients de l'art antérieur et qui en particulier évite au moins un transfert manuel des marchandises les unes après les autres vers le véhicule de transport.

US 3 945 661 A divulgue les caractéristiques du préambule de la revendication 1.

A cet effet, est proposé un véhicule de transport comportant les caractéristiques de la revendication 1 annexée.

Avantageusement, chaque premier moyen d'accrochage est en appui sur le premier système de fixation correspondant, et chaque deuxième moyen d'accrochage s'accroche avec le deuxième système de fixation correspondant par le dessous.

Avantageusement, chaque premier moyen d'accrochage comporte une base montée mobile en rotation à l'extrémité de la poutrelle transversale autour d'un axe de rotation, l'extrémité libre de la base présente un élément d'accrochage qui coopère avec le premier système de fixation, la partie supérieure de la base présente des moyens de pénétration qui sont prévus pour pénétrer dans la palette, et la partie inférieure de la base présente une butée qui limite la rotation de la base vers le haut.

Avantageusement, les moyens de pénétration comportent au moins une dent pointant vers le haut et pénétrant dans la palette par le dessous et au moins un ergot orienté vers l'intérieur et pénétrant dans la palette par le côté orienté vers l'extérieur.

Avantageusement, le véhicule de transport comporte des moyens de relèvement configurés pour mettre le cadre en appui contre la face inférieure de la palette.

Avantageusement, les moyens de relèvement consistent, pour chaque poutrelle transversale, en une lame ressort en arc de cercle dont les extrémités sont fixées sous la poutrelle transversale.

Avantageusement, le véhicule de transport comporte un système de traction solidaire des deux barres longitudinales.

Avantageusement, le véhicule de transport comporte une barre transversale reliant les deux barres longitudinales et comportant un sabot, le système de traction comprend un étrier monté mobile sur le sabot en rotation autour d'un axe horizontal de rotation, et un dispositif de verrouillage mobile entre au moins une position verrouillée dans laquelle la rotation de l'étrier autour du sabot est bloquée, et une position déverrouillée dans laquelle la rotation de l'étrier autour du sabot est libre.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :
la Fig. 1 est une vue en perspective d'un véhicule de transport selon un premier mode de réalisation de l'invention,
la Fig. 2 est une vue de dessus du véhicule de transport de la Fig. 1,
la Fig. 3 est une vue en perspective d'un sous-ensemble d'une charge selon une première variante,
la Fig. 4 est un détail d'un système d'accrochage dans une position libre,
la Fig. 5 montre le système d'accrochage dans une position verrouillée,
la Fig. 6 est une vue en perspective d'une charge selon une deuxième variante,
la Fig. 7 et la Fig. 8 sont des détails de la fixation de la charge de la Fig. 6 sur le véhicule de transport de la Fig. 1,
les Figs. 9a-c montrent des détails de la charge de la Fig. 6,
la Fig. 10 est une vue en perspective d'un véhicule de transport selon un deuxième mode de réalisation de l'invention,
la Fig. 11 est une vue en perspective d'une articulation du véhicule de transport de la Fig. 10,
les Figs. 12a-c montrent les étapes de chargement du véhicule de transport de la Fig. 1, et
les Figs. 13a-c montrent les étapes de chargement du véhicule de transport de la Fig. 10.

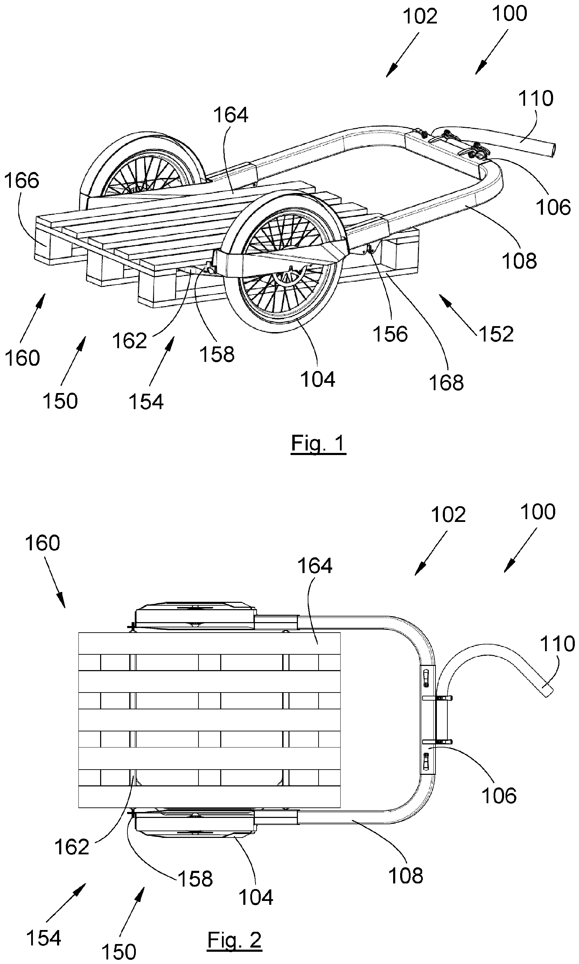

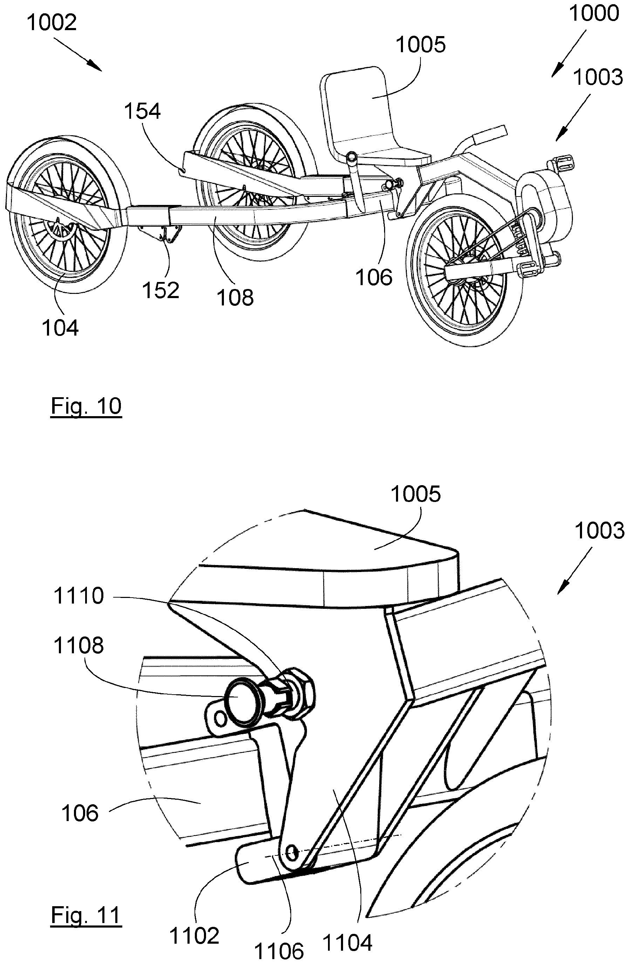

Dans la description qui suit, les termes relatifs à une position sont pris en référence à un véhicule de transport en position de roulage, c'est-à-dire comme il est représenté sur les Figs. 1 et 10.

La Fig. 1 et la Fig. 2 montrent un véhicule de transport 100 selon un premier mode de réalisation de l'invention, qui présente un châssis 102 et deux roues 104 solidaires du châssis 102 et permettant d'assurer le déplacement du véhicule de transport 100 sur le sol.

Le châssis 102 se présente sous la forme d'un U avec une barre transversale 106 et deux barres longitudinales 108. La barre transversale 106 présente ici des moyens d'attelage 110 qui permettent d'accrocher le châssis 102 à un véhicule tracteur comme par exemple un vélo ou un système motorisé. Les moyens d'attelage 110 peuvent prendre toutes les formes envisageables en fonction du véhicule tracteur devant y être accroché. Dans le mode de réalisation de l'invention présenté sur les Figs. 1 et 2, les moyens d'attelage 110 prennent la forme d'une articulation pouvant être fixée sur le cadre d'un vélo.

Chaque barre longitudinale 108 s'étend ici vers l'arrière de la barre transversale 106 et porte une des roues 104.

Le véhicule de transport 100 présente également une charge 150 qui est fixée de manière amovible sur le châssis 102 entre les barres longitudinales 108. A cette fin, chaque barre longitudinale 108 présente d'un côté de la roue 104, ici à l'arrière, un premier système de fixation 154 et, de l'autre côté de la roue 104, ici à l'avant, un deuxième système de fixation 152.

La charge 150 présente, pour chaque premier système de fixation 154, un premier moyen d'accrochage 158 et pour chaque deuxième système de fixation 152, un deuxième moyen d'accrochage 156.

Chaque système de fixation 152, 154 et le moyen d'accrochage 156, 158 associé sont configurés pour assurer une liaison amovible entre eux. C'est-à-dire qu'ils peuvent être solidarisés pour permettre la fixation de la charge 150 sur le châssis 102 pour le roulage et désolidarisés pour permettre la séparation de la charge 150 et du châssis 102.

Ainsi, il est possible de charger la charge 150 sur un lieu de chargement, d'attacher la charge 150 sur le châssis 102, de transporter cette charge 150 vers un lieu de déchargement et de séparer la charge 150 du châssis 102. Le transport est ainsi facilité, puisqu'il n'est plus nécessaire de charger chaque marchandise individuellement, mais il est possible après avoir réalisé une charge 150 complète de la soulever et la transporter sans avoir recours à un engin de levage supplémentaire.

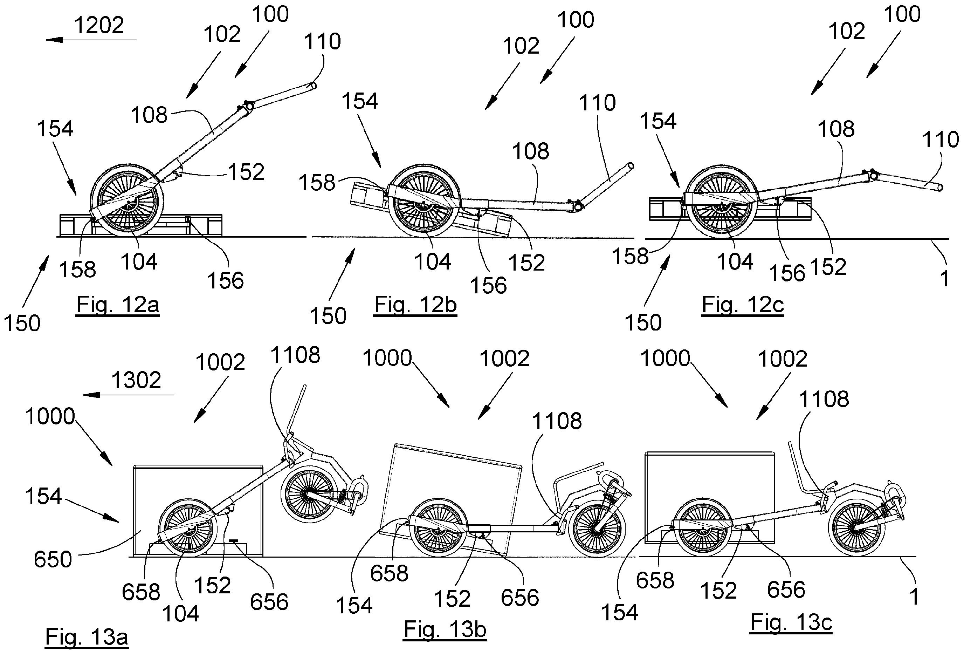

Les Figs. 12a-c montrent les étapes de chargement de la charge 150 sur le châssis 102 à partir d'une position où la charge 150 repose sur le sol 1.

Sur la Fig. 12a, ici la partie avant du châssis 102 est levée par rotation autour de l'axe des roues 104, le châssis 102 est reculé (flèche 1202) pour placer la charge 150 entre les barres longitudinales 108 et pour que chaque premier système de fixation 154 se positionne sous le premier moyen d'accrochage 158 correspondant.

Sur la Fig. 12b, la partie avant du châssis 102 est abaissée par rotation autour de l'axe des roues 104, pour que chaque premier système de fixation 154 vienne en appui sous le premier moyen d'accrochage 158 et le soulève. La rotation du châssis 102 se poursuit jusqu'à ce que chaque deuxième système de fixation 152 vienne s'accrocher avec le deuxième moyen d'accrochage 156 correspondant. L'abaissement est réalisé en particulier par le poids de l'opérateur.

Sur la Fig. 12c, la charge 150 est accrochée sur le châssis 102 et le véhicule de transport 100 est prêt à rouler.

Le déchargement de la charge 150 s'effectue de manière inverse, en abaissant le châssis 102 pour poser l'avant de la charge 150 sur le sol 1 (Fig. 12b), en désolidarisant chaque deuxième système de fixation 152 et le deuxième moyen d'accrochage 156 correspondant, en basculant le châssis 102 vers l'arrière (Fig. 12a) pour poser la partie arrière de la charge 150 et désolidariser chaque premier système de fixation 154 du premier moyen d'accrochage 158 correspondant. Le châssis 102 peut ensuite être dégagé par avancement (flèche inverse à 1202).

Le chargement et le déchargement de la charge 150 sont donc simples et aisés du fait de la présence du bras de levier réalisé par le châssis 102. Bien sûr, si la charge 150 comporte plusieurs colis qui ne sont pas destinés au même destinataire, il est toujours possible de décharger les différents colis dans des lieux de déchargement différents.

Chaque premier moyen d'accrochage 158 est donc en appui sur le premier système de fixation 154 correspondant. Chaque deuxième moyen d'accrochage 156 s'accroche avec le deuxième système de fixation 152 correspondant par le dessous.

Chaque deuxième système de fixation 152 prend ici la forme d'une serrure, par exemple du type serrure d'un ouvrant de voiture, présentant un pêne mobile qui se verrouille automatiquement sur une gâche fixe lorsque celle-ci pénètre dans la serrure. La gâche est ici le deuxième moyen d'accrochage 156. Pour déverrouiller la serrure, le châssis 102 est équipé d'une poignée de déverrouillage reliée à la serrure par un réseau de câbles et pouvant être actionné par un utilisateur pour déplacer le pêne afin de libérer la gâche.

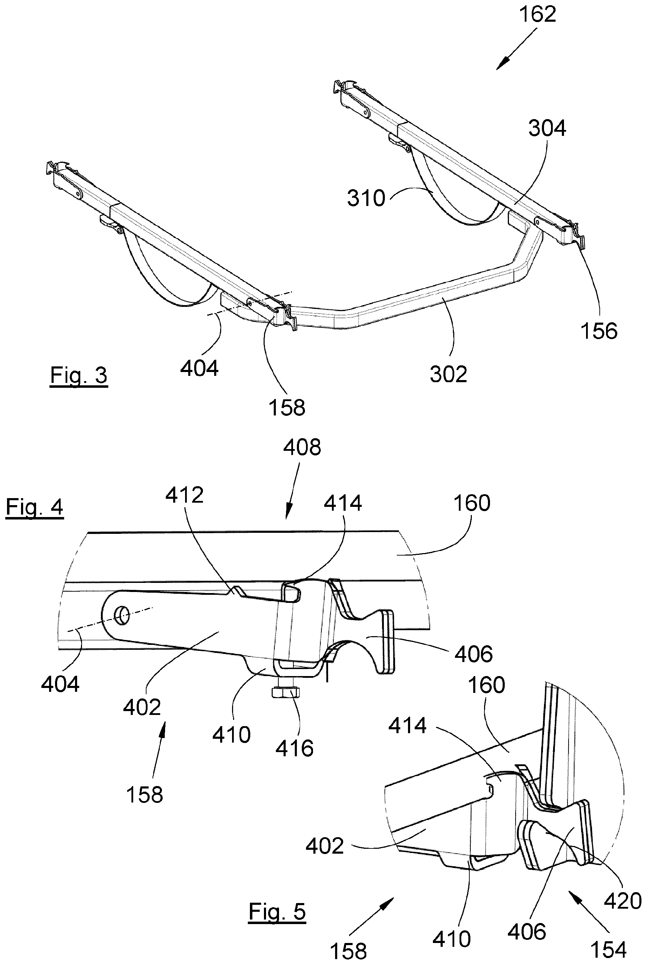

Selon une première variante, la charge 150 comporte une palette 160 et un cadre 162 qui est vu en détail sur la Fig. 3. La palette 160 est ici du type palette en bois avec un plateau 164 et des pieds 166 espacés les uns des autres.

Le cadre 162 prend la forme d'un H qui présente une poutrelle longitudinale 302 et deux poutrelles transversales 304. Les directions longitudinale et transversale sont prises en référence au véhicule de transport 100.

Une telle architecture ouverte permet une insertion du cadre par un côté de la palette 160.

Les deux extrémités de chaque poutrelle transversale 304 présentent un deuxième moyen d'accrochage 156 ou un premier moyen d'accrochage 158 qui prennent ici la forme d'une lame. Les deuxièmes moyens d'accrochage 156 et les premiers moyens d'accrochage 158 sont ici identiques mais dans un autre mode de réalisation, ils peuvent être différents.

La Fig. 4 montre un mode de réalisation particulier d'un premier moyen d'accrochage 158.

Le premier moyen d'accrochage 158 comporte une base 402 montée mobile en rotation à l'extrémité de la poutrelle transversale 304 autour d'un axe de rotation 404 parallèle à la direction longitudinale du véhicule de transport 100. L'extrémité libre de la base 402 présente un élément d'accrochage 406 qui coopère avec le premier système de fixation 154. La partie supérieure de la base 402 présente des moyens de pénétration 408 qui sont prévus pour pénétrer dans la palette 160 pour solidariser la palette 160 et le cadre 162 et ainsi éviter la désolidarisation lors du roulage. La partie inférieure de la base 402 présente une butée 410 qui limite la rotation de la base 402 vers le haut en venant en butée contre la poutrelle transversale 304. Pour limiter la rotation de la base 402 vers le bas, le premier moyen d'accrochage 158 comporte ici une vis 416 dont la tige filetée traverse la butée 410 et se visse dans la poutrelle transversale 304.

Les moyens de pénétration 408 comprennent ici au moins une dent 412 pointant vers le haut et qui pénètre dans la palette 160 par le dessous et au moins un ergot 414 orienté vers l'intérieur et qui pénètre dans la palette 160 par le côté orienté vers l'extérieur.

La Fig. 5 montre la coopération du premier système de fixation 154 et du premier moyen d'accrochage 158 qui est en appui contre le premier système de fixation 154 qui prend la forme d'un logement pour y placer l'élément d'accrochage 406.

Pour éviter que les barres longitudinales 108 s'écartent sous l'effet de la charge 150, chaque moyen d'accrochage 156, 158 présente un retour 420, ici en forme d'arc de cercle de l'élément d'accrochage 406. Les retours 420 viennent en appui contre les faces extérieures des barres longitudinales 108 évitant ainsi leur écartement.

Lorsque le châssis 102 est basculé pour soulever la partie arrière de la charge 150, le premier système de fixation 154 soulève l'élément d'accrochage 406 dont les dents 412 et les ergots 414 pénètrent dans la palette 160. La butée 410 limite l'amplitude de rotation du premier moyen d'accrochage 158. Le positionnement des ergots 414 de chaque côté de la charge 150 permet un centrage de cette dernière.

Afin d'assurer que le cadre 162 soit à une altitude suffisante pour que les premiers systèmes de fixation 154 puissent coopérer avec les premiers moyens d'accrochage 158, sans qu'il soit nécessaire de trop relever l'avant du châssis 102, le cadre 162 présente, sous chaque poutrelle transversale 304, une lame ressort 310 en arc de cercle dont les extrémités sont fixées sous la poutrelle transversale 304 et dont la forme arrondie est orienté vers le sol 1. Chaque lame ressort 310 relève ainsi le cadre 162.

Les lames ressort 310 permettent également de plaquer le cadre 162 contre la face inférieure de la palette 160 et plus particulièrement du plateau 164 afin d'assurer que les moyens de pénétration 408 soient en position pour interagir avec la palette 160.

Pour assurer l'action de la lame ressort 310 et donc un bon placage contre la face inférieure du plateau 164, il faut que la lame ressort 310 soit mise en contrainte lorsque le cadre 162 est placé sous la palette 160.

Ainsi lorsque les pieds 166 reposent directement sur le sol 1, il faut que la somme de la hauteur entre le point de contact de la lame ressort 310 sur le sol 1 et la face inférieure de la poutrelle transversale 304 et de la hauteur de la poutrelle transversale 304 soit supérieure à la hauteur de la face inférieure du plateau 164 au sol 1.

Et lorsque la palette 160 est une palette avec une semelle 168 sous les pieds 166, le cadre 162 est alors pris entre la semelle 168 et la face inférieure du plateau 164, et il faut que la somme de la hauteur entre le point de contact de la lame ressort 310 sur la face supérieure de la semelle 168 et la face inférieure de la poutrelle transversale 304 et de la hauteur de la poutrelle transversale 304 soit supérieure à la hauteur de la face inférieure du plateau 164 à la face supérieure de la semelle 168.

La lame ressort 310 peut être remplacée par tous moyens de relèvement configurés pour mettre le cadre 162 en appui contre la face inférieure de la palette 160 et donc plus particulièrement du plateau 164. Ces moyens de relèvement peuvent être par exemple des sangles qui enserrent la charge 150 et le cadre 162. Ces moyens de relèvement peuvent être un système à parallélogramme comportant une partie inférieure reliée au cadre 162 par deux biellettes parallèles, où la partie inférieure repose sur le sol ou sur la semelle 168.

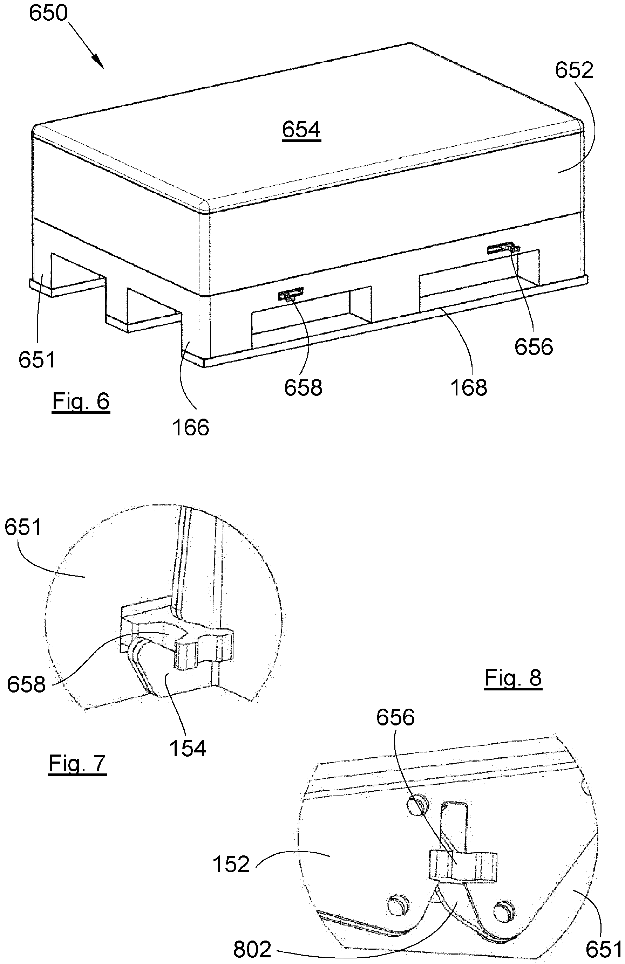

La Fig. 6 montre une deuxième variante de la charge 650 qui prend la forme d'une palette 651 intégrant sur chaque côté de deux côtés opposés, un deuxième moyen d'accrochage 656 et un premier moyen d'accrochage 658. La palette 651 peut être une palette simple ou intégrer une caisse 652 qui est ici fermée par un couvercle 654. De la même manière, la palette 651 présente ici des espaces permettant le passage de bras d'un engin de transport du type transpalette, mais la palette 651 pourrait ne pas présenter de tels espaces et constituer un simple fond éventuellement sur roulettes.

Les autres éléments comme par exemple la semelle 168 et les retours 420 pour empêcher l'écartement des barres longitudinales 108 peuvent être également présents.

La Fig. 7 montre le premier moyen d'accrochage 658 en appui sur le premier système de fixation 154 qui prend également la forme d'un logement pour y placer le premier moyen d'accrochage 658 qui prend la forme d'une poutrelle horizontale.

La Fig. 8 montre le deuxième moyen d'accrochage 656 qui est verrouillé par le deuxième système de fixation 152 ici sous la forme d'une serrure avec un pêne mobile 802 qui se verrouille sur le deuxième moyen d'accrochage 656 constituant la gâche sous forme d'une poutrelle horizontale.

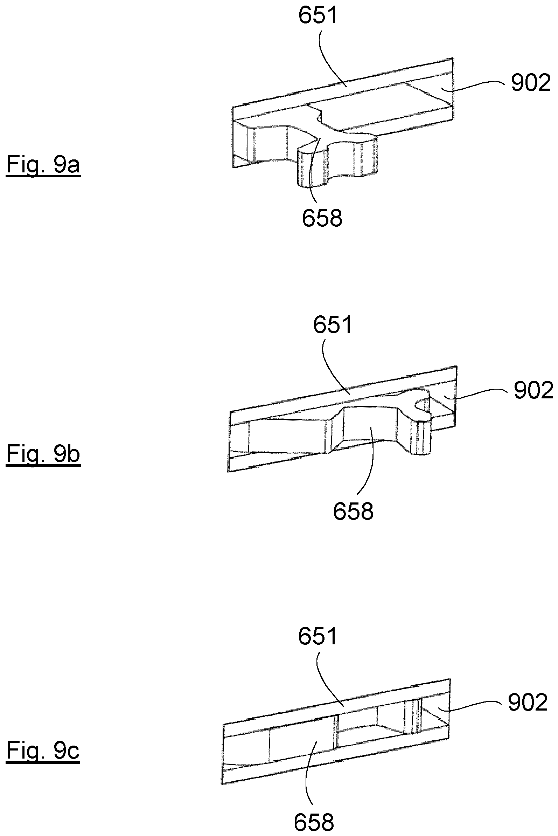

Pour escamoter les moyens d'accrochage 656 et 658 lorsque la palette 651 n'est pas chargée sur le châssis 102, chacun des moyens d'accrochage 656 et 658 est escamotable dans un logement 902 prévu à cet effet dans la palette 651. Dans le mode de réalisation de l'invention présenté sur les Figs. 9a-c, chaque moyen d'accrochage 656, 658 est monté mobile en rotation dans le logement 902 autour d'un axe de rotation vertical.

Sur la Fig. 9a, le premier moyen d'accrochage 658 est entièrement sorti et en position pour s'accrocher sur le châssis 102.

Sur la Fig. 9b, le premier moyen d'accrochage 658 est en phase d'escamotage ou en phase de sortie selon le sens de rotation.

Sur la Fig. 9c, le premier moyen d'accrochage 658 est entièrement escamoté dans le logement 902.

La Fig. 10 montre un véhicule de transport 1000 selon un deuxième mode de réalisation de l'invention qui présente un châssis 1002 qui intègre à l'avant un système de traction 1003, ici un système à pédale à une roue et avec un siège 1005 pour le conducteur. Mais le système de traction 1003 peut être un système motorisé. Pour permettre un changement de direction, du système de traction 1003 lors du roulage, un axe de rotation vertical est avantageusement prévu, soit au niveau de la roue avant, soit au niveau de la jonction entre le véhicule de transport 1000 et le système de traction 1003.

Comme pour le châssis du véhicule de transport du premier mode de réalisation de la Fig. 1, le châssis 1002 se présente sous la forme d'un U avec une barre transversale 106 et deux barres longitudinales 108, chacune portant une roue 104.

Le système de traction 1003 est solidaire des deux barres longitudinales 108, ici par l'intermédiaire de la barre transversale 106.

Chaque barre longitudinale 108 présente d'un côté de la roue 104, ici à l'avant, un deuxième système de fixation 152 et de l'autre côté de la roue 104, ici à l'arrière, un premier système de fixation 154.

Une charge 150, 650 selon les modes de réalisation décrits ci-dessus peut être chargée entre les barres longitudinales 108.

La Fig. 11 montre un agrandissement de la jonction entre le système de traction 1003 et la barre transversale 106 qui comporte un sabot 1102.

Le système de traction 1003 comprend un étrier 1104 monté mobile sur le sabot 1102 en rotation autour d'un axe horizontal de rotation 1106 et transversal par rapport au sens d'avancement du véhicule de transport 1000, et un dispositif de verrouillage 1108.

Le dispositif de verrouillage 1108 présente au moins une position verrouillée dans laquelle la rotation de l'étrier 1104 autour du sabot 1102 est bloquée, et une position déverrouillée dans laquelle la rotation de l'étrier 1104 autour du sabot 1102 est libre. Dans le mode de réalisation de l'invention présenté sur les Figs. 13a-c, il y a deux positions verrouillées.

Les Figs. 13a-c montrent les étapes de chargement de la charge 650 sur le châssis 1002 à partir d'une position où la charge 650 repose sur le sol 1. Une première position verrouillée correspond à une position de basculement (Fig. 13b) et une deuxième position verrouillée correspond à la position de roulage (Fig. 13c). Dans la première position verrouillée, la longueur du bras de levier permettant d'abaisser le châssis 1002 est allongée par rapport à la deuxième position verrouillée pour faciliter le basculement. La position déverrouillée correspond à la position de mise en place des premiers systèmes de fixation 154 avec les premiers moyens d'accrochage 658.

Sur la Fig. 13a, le dispositif de verrouillage 1108 est en position déverrouillée et la partie avant du châssis 1002 est levée par rotation autour de l'axe des roues 104, le châssis 1002 est reculé (flèche 1302) pour placer la charge 650 entre les barres longitudinales 108 et pour que chaque premier système de fixation 154 se positionne sous le premier moyen d'accrochage 658 correspondant.

Sur la Fig. 13b, le dispositif de verrouillage 1108 est dans la première position verrouillée et la partie avant du châssis 1002 est abaissée par rotation autour de l'axe des roues 104, pour que chaque premier système de fixation 154 vienne en appui sous le premier moyen d'accrochage 658 et le soulève. La rotation du châssis 1002 se poursuit jusqu'à ce que chaque deuxième système de fixation 152 vienne s'accrocher avec le deuxième moyen d'accrochage 656 correspondant.

Sur la Fig. 13c, le système de traction 1003 est remis en position de roulage et le dispositif de verrouillage 1108 est mis dans la deuxième position verrouillée et la charge 650 est accrochée sur le châssis 1002 et le véhicule de transport 1000 est prêt à rouler.

Dans le mode de réalisation de l'invention présenté ici, l'étrier 1104 présente un trou et le sabot 1102 présente un trou pour chaque position verrouillée, l'un correspondant à la première position verrouillée et l'autre correspondant à la deuxième position verrouillée, et le dispositif de verrouillage 1108 prend ici la forme d'un doigt d'indexage 1110. Dans la première position verrouillée, le trou de l'étrier 1104 s'aligne avec le trou du sabot 1102 correspondant à la première position verrouillée, et le doigt d'indexage 1110 s'insère dans ces deux trous alignés pour verrouiller la première position verrouillée du système de traction 1003. Dans la deuxième position verrouillée, le trou de l'étrier 1104 s'aligne avec le trou du sabot 1102 correspondant à la deuxième position verrouillée, et le doigt d'indexage 1110 s'insère dans ces deux trous alignés pour verrouiller la deuxième position verrouillée du système de traction 1003.

Pour adapter les dimensions du châssis 102, 1002 aux dimensions de la charge 150, 650, la barre transversale 106 et les barres longitudinales 108 peuvent être télescopiques avec des moyens de blocage appropriés pour bloquer les parties télescopiques. De la même manière, le cadre 162 peut présenter une poutrelle longitudinale 302 et deux poutrelles transversales 304 qui sont télescopiques et munies de moyens de blocage appropriés.

D'une manière plus générale, le châssis 102, 1002 peut prendre une forme différente, et être intégré au châssis du système de traction 1003, et les deux barres longitudinales 108 se rejoignent sous la forme d'un Y ou être des extensions du châssis du système de traction 1003 qui est alors directement solidaire des deux barres longitudinales 108. D'une manière donc plus générale, le châssis 102, 1002 comporte les deux barres longitudinales 108.

L'abaissement du châssis 102, 1002 lors du chargement de la charge 150, 650 sur le châssis 102, 1002 peut également être réalisé par l'intermédiaire d'articulations assistées, en particulier lorsque les barres longitudinales 108 sont solidaires du châssis du système de traction 1003.

Les positions du deuxième système de fixation 152, du premier système de fixation 154, du deuxième moyen d'accrochage 156, 656, et du premier moyen d'accrochage 158, 658 peuvent être indifféremment à l'avant ou à l'arrière des roues 104, en particulier selon que le véhicule de transport 100, 1000 soit tracté ou propulsé par le véhicule tracteur ou le système de traction 1003.

Il est également possible d'envisager des premiers systèmes de fixation 154 et des premiers moyens d'accrochage 158, 658 différents. Par exemple, il est possible de prévoir que les premiers moyens d'accrochage 158, 658 prennent la forme d'anneaux, et que les premiers systèmes de fixation 154 prennent la forme de crochets s'insérant dans les anneaux. Il est également possible que les premiers moyens d'accrochage 158, 658 prennent la forme de gâches, et que les premiers systèmes de fixation 154 prennent la forme de serrures.

Il est également possible de prévoir que les deuxièmes systèmes de fixation 152 qui sont ici de part et d'autre du plan médian du véhicule de transport 10, 1000, soient remplacés par un seul deuxième système de fixation 152 disposé sur la partie avant du châssis 102, 1002 et donc de la charge 150, 650. Le véhicule de transport 100, 1000 comporte ainsi, sur chaque barre longitudinale 108 et d'un côté de la roue 104, un premier système de fixation 154, et le châssis 102, 1002 présente de l'autre côté de la roue 104, au moins un deuxième système de fixation 152.

Comme décrit ci-dessus, il peut y avoir deux deuxièmes systèmes de fixation 152, répartis sur chaque barre longitudinale 108, mais il peut y en avoir qu'un sur la barre transversale 106 ou sur la zone de jonction entre les deux barres longitudinales 108 ou sur le système de traction 1003.

Dans le cas de trois points de fixation, le cadre 162 prend alors la forme d'un T et la palette 651 présente deux premiers moyens d'accrochage 658 sur deux de ses côtés opposés et un deuxième moyen d'accrochage 656 sur l'un des deux autres côtés.

## Revendications

1. Véhicule de transport (100, 1000) comportant :
- un châssis (102, 1002) comportant deux barres longitudinales (108) sur chacune desquelles est montée une roue (104) et
- une charge (150, 650) disposée entre les barres longitudinales (108),
chaque barre longitudinale (108) présentant à l'arrière de la roue (104), un premier système de fixation (154) et,
à l'avant de la roue (104), au moins un deuxième système de fixation (152),
la charge (150, 650) présentant, pour chaque premier système de fixation (154), un premier moyen d'accrochage (158, 658) et pour chaque deuxième système de fixation (152), un deuxième moyen d'accrochage (156, 656), chaque système de fixation (152, 154) et le moyen d'accrochage (156, 656, 158, 658) associé étant configurés pour assurer une liaison amovible entre eux,
la charge (150, 650) étant accrochée sur le châssis (102, 1002) à partir d'une position où la charge (150, 650) repose sur le sol (1) :
- en levant la partie avant du châssis (102, 1002) par rotation autour de l'axe des roues (104) pour que chaque premier système de fixation (154) se positionne sous le premier moyen d'accrochage (158, 658) correspondant, puis
- en abaissant la partie avant du châssis (102, 1002) par rotation autour de l'axe des roues (104) pour que, dans un premier temps, chaque premier système de fixation (154) vienne en appui sous le premier moyen d'accrochage (158, 658) correspondant et le soulève, puis dans une deuxième temps pour que chaque deuxième système de fixation (152) vienne s'accrocher avec le deuxième moyen d'accrochage (156, 656) correspondant, et
la charge (150, 650) étant déchargée du châssis :
- en abaissant la partie avant du châssis (102, 1002) par rotation autour de l'axe des roues (104) pour poser l'avant de la charge (150, 650) sur le sol (1) et désolidariser chaque deuxième système de fixation (152) et le deuxième moyen d'accrochage (156, 656) correspondant, puis
- en levant la partie avant du châssis (102, 1002) par rotation autour de l'axe des roues (104) pour poser l'arrière de la charge (150, 650) sur le sol (1) et désolidariser chaque premier système de fixation (154) du premier moyen d'accrochage (158, 658) correspondant
**caractérisé en ce que** la charge (150) comporte une palette (160) et un cadre (162) placé sous la palette (160) par insertion du cadre (162) par un côté de la palette (160), le cadre (162) en forme de H présentant une poutrelle longitudinale (302) et deux poutrelles transversales (304), les extrémités de chaque poutrelle transversale (304) présentant un deuxième moyen d'accrochage (156) ou un premier moyen d'accrochage (158).

2. Véhicule de transport (100, 1000) selon la revendication 1, **caractérisé en ce que** chaque premier moyen d'accrochage (158, 658) est en appui sur le premier système de fixation (154) correspondant, et **en ce que** chaque deuxième moyen d'accrochage (156, 656) s'accroche avec le deuxième système de fixation (152) correspondant par le dessous.

3. Véhicule de transport (100, 1000) selon la revendication 1 ou 2, **caractérisé en ce que** chaque premier moyen d'accrochage (158) comporte une base (402) montée mobile en rotation à l'extrémité de la poutrelle transversale (304) autour d'un axe de rotation (404), **en ce que** l'extrémité libre de la base (402) présente un élément d'accrochage (406) qui coopère avec le premier système de fixation (154), **en ce que** la partie supérieure de la base (402) présente des moyens de pénétration (408) qui sont prévus pour pénétrer dans la palette (160), et **en ce que** la partie inférieure de la base (402) présente une butée (410) qui limite la rotation de la base (402) vers le haut.

4. Véhicule de transport (100, 1000) selon la revendication 3, **caractérisé en ce que** les moyens de pénétration (408) comportent au moins une dent (412) pointant vers le haut et pénétrant dans la palette (160) par le dessous et au moins un ergot (414) orienté vers l'intérieur et pénétrant dans la palette (160) par le côté orienté vers l' extérieur.

5. Véhicule de transport (100, 1000) selon l'une des revendications 2 à 4, **caractérisé en ce qu'**il comporte des moyens de relèvement (310) configurés pour mettre le cadre (162) en appui contre la face inférieure de la palette (160).

6. Véhicule de transport (100, 1000) selon la revendication 5, **caractérisé en ce que** les moyens de relèvement (310) consistent, pour chaque poutrelle transversale (304), en une lame ressort (310) en arc de cercle dont les extrémités sont fixées sous la poutrelle transversale (304).

7. Véhicule de transport (1000) selon l'une des revendications 1 à 6, **caractérisé en ce qu'**il comporte un système de traction (1003) solidaire des deux barres longitudinales (108).

8. Véhicule de transport (1000) selon la revendication 7, **caractérisé en ce qu'**il comporte une barre transversale (106) reliant les deux barres longitudinales (108) et comportant un sabot (1102), **en ce que** le système de traction (1003) comprend un étrier (1104) monté mobile sur le sabot (1102) en rotation autour d'un axe horizontal de rotation (1106), et un dispositif de verrouillage (1108) mobile entre au moins une position verrouillée dans laquelle la rotation de l'étrier (1104) autour du sabot (1102) est bloquée, et une position déverrouillée dans laquelle la rotation de l'étrier (1104) autour du sabot (1102) est libre.

## Patentansprüche

1. Transportfahrzeug (100, 1000), das Folgendes umfasst:
- ein Fahrgestell (102, 1002), das zwei Längsstangen (108) umfasst, wobei auf jeder ein Rad (104) montiert ist, und
- eine Last (150, 650), die zwischen den Längsstangen (108) angeordnet ist,
wobei jede Lenkstange (108) hinter dem Rad (104) ein erstes Befestigungssystem (154) aufweist, und
vor dem Rad (104) mindestens ein zweites Befestigungssystem (152),
wobei die Last (150, 650) für jedes erste Befestigungssystem (154) ein erstes Einhakmittel (158, 658) umfasst, und für jedes zweite Befestigungssystem (152) ein zweites Einhakmittel (156, 656), wobei jedes Befestigungssystem (152, 154) und das zugeordnete Einhakmittel (156, 656, 158, 658) dazu konfiguriert sind, eine abnehmbare Verbindung zwischen diesen sicherzustellen,
wobei die Last (150, 650) auf dem Fahrgestell (102, 1002) ausgehend von einer Position eingehakt ist, in der die Last (150, 650) auf dem Boden (1) beruht:
- durch Heben des vorderen Teils des Fahrgestells (102, 1002) durch Drehung um die Achse der Räder (104), damit sich dieses erste Befestigungssystem (154) unter dem ersten entsprechenden Einhakmittel (158, 658) positioniert, dann
- durch Senken des vorderen Teils des Fahrgestells (102, 1002) durch Drehung um die Achse der Räder (104), damit zuerst jedes erste Befestigungssystem (154) unter dem ersten entsprechenden Einhakmittel (158, 658) zum Aufliegen kommt und dieses anhebt, dann, damit in einem zweiten Zeitpunkt jedes zweite Befestigungssystem (152) zum Einhaken mit dem zweiten entsprechenden Einhakmittel (156, 656) kommt, und
das Fahrgestell von der Last (150, 650) entlastet wird:
- durch Senken des vorderen Teils des Fahrgestells (102, 1002) durch Drehung um die Achse der Räder (104), um die Vorderseite der Last (150, 650) auf dem Boden (1) abzustellen und jedes zweite Befestigungssystem (152) und das entsprechende zweite Einhakmittel (156, 656) zu trennen, dann
- durch Heben des vorderen Teils des Fahrgestells (102, 1002) durch Drehung um die Achse der Räder (104), um die Rückseite der Last (150, 650) auf dem Boden (1) abzustellen und jedes erste Befestigungssystem (154) von dem ersten entsprechenden Einhakmittel (158, 658) zu trennen,
**dadurch gekennzeichnet, dass** die Last (150) eine Palette (160) und einen Rahmen (162), der unter der Palette (160) durch Einfügen des Rahmens (162) durch eine Seite der Palette (160) platziert ist, umfasst, wobei der Rahmen (162) in H-Form einen Längsträger (302) und zwei Querträger (304) aufweist, wobei die Enden jedes Querträgers (304) ein zweites Einhakmittel (156) oder ein erstes Einhakmittel (158) aufweisen.

2. Transportfahrzeug (100, 1000) nach Anspruch 1, **dadurch gekennzeichnet, dass** das erste Einhakmittel (158, 658) auf dem ersten entsprechenden Befestigungssystem (154) aufliegt, und dass sich jedes zweite Einhakmittel (156, 656) in das zweite entsprechende Befestigungssystem (152) von unten her einhakt.

3. Transportfahrzeug (100, 1000) nach Anspruch 1 oder 2, **dadurch gekennzeichnet, dass** jedes erste Einhakmittel (158) eine Basis (402) umfasst, die in Drehung an dem Ende des Querträgers (304) um eine Drehachse (404) beweglich montiert ist, dass das freie Ende der Basis (402) ein Einhakelement (406) aufweist, das mit dem ersten Befestigungssystem (154) zusammenwirkt, dass der obere Teil der Basis (402) Eindringmittel (408) aufweist, die dazu vorgesehen sind, in die Palette (160) einzudringen, und dass der untere Teil der Basis (402) einen Anschlag (410) aufweist, der die Drehung der Basis (402) nach oben einschränkt.

4. Transportfahrzeug (100, 1000) nach Anspruch 3, **dadurch gekennzeichnet, dass** die Eindringmittel (408) mindestens einen Zahn (412) umfassen, der nach oben zeigt und in die Palette (160) von unten her eindringt, und mindestens einen Dorn (414), der zu dem Inneren gerichtet ist und in die Palette (160) durch die nach außen gerichtete Seite eindringt.

5. Transportfahrzeug (100, 1000) nach einem der Ansprüche 2 bis 4, **dadurch gekennzeichnet, dass** es Anhebemittel (310) umfasst, die dazu konfiguriert sind, den Rahmen (162) in Auflage gegen die untere Fläche der Palette (160) zu bringen.

6. Transportfahrzeug (100, 1000) nach Anspruch 5, **dadurch gekennzeichnet, dass** die Anhebemittel (310) für jeden Querträger (304) aus einer Kreisbogen-Blattfeder (310) bestehen, deren Enden unter dem Querträger (304) befestigt sind.

7. Transportfahrzeug (1000) nach einem der Ansprüche 1 bis 6, **dadurch gekennzeichnet, dass** es ein Zugsystem (1003) umfasst, das fest mit den beiden Längsstangen (108) verbunden ist.

8. Transportfahrzeug (1000) nach Anspruch 7, **dadurch gekennzeichnet, dass** es eine Querstange (106) umfasst, die die beiden Längsstangen (108) verbindet, und einen Schuh (1102) umfasst, dass das Zugsystem (1003) einen Bügel (1104) umfasst, der auf den Schuh (1102) in Drehung beweglich um eine horizontale Drehachse (1106) montiert ist, und eine Verriegelungsvorrichtung (1108), die zwischen mindestens einer verriegelten Position, in der die Drehung des Bügels (1104) um den Schuh (1102) blockiert ist, und einer entriegelten Position, in der die Drehung des Bügels (1104) um den Schuh (1102) frei ist, beweglich ist.

## Claims

1. A transport vehicle (100, 1000) including:
- a chassis (102, 1002) including two longitudinal bars (108) on each of which a wheel (104) is mounted and
- a load (150, 650) disposed between the longitudinal bars (108), each longitudinal bar (108) having at the rear of the wheel (104), a first fixing system (154) and,
at the front of the wheel (104), at least a second fixing system (152), the load (150, 650) having, for each first fixing system (154), a first hooking means (158, 658) and for each second fixing system (152), a second hooking means (156, 656), each fixing system (152, 154) and the associated hooking means (156, 656, 158, 658) being configured to ensure a removable connection therebetween,
the load (150, 650) being hooked on the chassis (102, 1002) from a position where the load (150, 650) rests on the ground (1):
- by lifting the front part of the chassis (102, 1002) by rotation around the axis of the wheels (104) so that each first fixing system (154) is positioned under the first corresponding hooking means (158, 658), then
- by lowering the front part of the chassis (102, 1002) by rotation around the axis of the wheels (104) so that, initially, each first fixing system (154) bears under the corresponding first hooking means (158, 658) and lifts it, then in a second step so that each second fixing system (152) is hooked with the second corresponding hooking means (156, 656), and
the load (150, 650) being unloaded from the chassis:
- by lowering the front part of the chassis (102, 1002) by rotation around the axis of the wheels (104) to place the front of the load (150, 650) on the ground (1) and disconnect each second fixing system (152) and the corresponding second hooking means (156, 656), then
- by lifting the front part of the chassis (102, 1002) by rotation around the axis of the wheels (104) to place the rear of the load (150, 650) on the ground (1) and disconnect each first fixing system (154) from the corresponding first hooking means (158, 658)
**characterised in that** the load (150) includes a pallet (160) and a frame (162) placed under the pallet (160) by insertion of the frame (162) through one side of the pallet (160), the H-shaped frame (162) having a longitudinal beam (302) and two transverse beams (304), the ends of each transverse beam (304) having a second hooking means (156) or a first hooking means (158).

2. The transport vehicle (100, 1000) according to claim 1, **characterised in that** each first attachment means (158, 658) bears on the first corresponding fixing system (154), and **in that** each second hooking means (156, 656) is hooked with the corresponding second fixing system (152) from below.

3. The transport vehicle (100, 1000) according to claim 1 or 2, **characterised in that** each first attachment means (158) includes a base (402) mounted movable in rotation at the end of the transverse beam (304) around an axis of rotation (404), **in that** the free end of the base (402) has a hooking element (406) which cooperates with the first fixing system (154), **in that** the upper part of the base (402) has penetration means (408) which are intended to penetrate the pallet (160), and **in that** the lower part of the base (402) has a stop (410) which limits the upward rotation of the base (402).

4. The transport vehicle (100, 1000) according to claim 3, **characterised in that** the penetration means (408) include at least one tooth (412) pointing upwards and penetrating the pallet (160) from below and at least one lug (414) oriented inwards and penetrating the pallet (160) from the side oriented outwards.

5. The transport vehicle (100, 1000) according to one of claims 2 to 4, **characterised in that** it includes lifting means (310) configured to bear the frame (162) against the lower face of the pallet (160).

6. The transport vehicle (100, 1000) according to claim 5, **characterised in that** the lifting means (310) consist, for each transverse beam (304), of a leaf spring (310) in an arc of a circle whose ends are fixed under the transverse beam (304).

7. The transport vehicle (1000) according to one of claims 1 to 6, **characterised in that** it includes a traction system (1003) integral with the two longitudinal bars (108).

8. The transport vehicle (1000) according to claim 7, **characterised in that** it includes a transverse bar (106) connecting the two longitudinal bars (108) and including a shoe (1102), **in that** the traction system (1003) comprises a stirrup (1104) movably mounted on the shoe (1102) in rotation around a horizontal axis of rotation (1106), and a locking device (1108) movable between at least one locked position wherein the rotation of the stirrup (1104) around the shoe (1102) is blocked, and an unlocked position wherein the rotation of the stirrup (1104) around the shoe (1102) is free.
